(19) Europäisches Patentamt
European Patent Office
Office européen des brevets

(11) **EP 3 770 124 A1**

(12) **EUROPÄISCHE PATENTANMELDUNG**

(43) Veröffentlichungstag:
**27.01.2021 Patentblatt 2021/04**

(51) Int Cl.:
**C03B 17/00** (2006.01)  **C03B 17/06** (2006.01)

(21) Anmeldenummer: **20186538.3**

(22) Anmeldetag: **17.07.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **24.07.2019 DE 102019120065**

(71) Anmelder: **SCHOTT AG**
**55122 Mainz (DE)**

(72) Erfinder:
- **GLACKI, Alexander**
**30173 Hannover (DE)**
- **BREITBACH, Christian**
**64285 Darmstadt (DE)**
- **HUNNIUS, Holger**
**55122 Mainz (DE)**
- **LANGE, Ulrich**
**55122 Mainz (DE)**
- **MÜNCH, Wolfgang**
**55270 Bubenheim (DE)**
- **RÖSEL, Gregor**
**65462 Ginsheim-Gustavsburg (DE)**
- **SEIBERT, Volker**
**65239 Hochheim am Main (DE)**
- **WEGENER, Holger**
**31061 Alfeld (DE)**

(74) Vertreter: **Blumbach · Zinngrebe Patentanwälte PartG mbB**
**Alexandrastraße 5**
**65187 Wiesbaden (DE)**

(54) **VORRICHTUNG UND VERFAHREN ZUR HERSTELLUNG VON GLASBÄNDERN**

(57) Der Erfindung liegt die Aufgabe zugrunde, eine in Bezug auf die Formtreue des Glasbands und die Vermeidung von Glasfehlern verbesserte Anordnung zum Ziehen von Glasbändern anzugeben. Dazu ist eine Vorrichtung (1) zum Ziehen von Glasbändern (3) aus einer Glasschmelze (5) vorgesehen, wobei die Vorrichtung (1) einen Ziehtank (7) zur Aufnahme einer Glasschmelze (5) aufweist, welcher eine untere Düsenöffnung (9) aufweist, durch welche die Glasschmelze (5) nach unten austreten kann, wobei die Vorrichtung einen Leitkörper (11) aufweist, der aus der Düsenöffnung (9) des Ziehtanks (7) nach unten herausragt, wobei der Leitkörper (11) zu den Rändern (90, 92) der Düsenöffnung (9) beabstandet gehaltert ist, so dass zwischen dem Leitkörper (11) und den Rändern (90, 92) der Düsenöffnung (9) zwei Düsenspalte (94, 96) gebildet werden, wobei der Leitkörper (11) entlang zumindest eines mittleren Abschnitts der Düsenöffnung (9) freitragend aufgehängt ist.

Fig. 1

EP 3 770 124 A1

**Beschreibung**

Die Erfindung betrifft allgemein die Glasherstellung. Insbesondere betrifft die Erfindung die Herstellung von Glasbändern im Down-Draw-Verfahren.

Zur Herstellung von Glasbändern sind verschiedene Ziehverfahren bekannt. Neben dem Float-Verfahren werden auch vertikale Ziehverfahren, wie das Overflow-Fusion-Verfahren und das Down-Draw-Verfahren eingesetzt. Für große Breiten der zu fertigenden Glasscheiben wird besonders das Float-Verfahren eingesetzt. Ein Nachteil bei diesem Verfahren ist, dass die beiden Seiten des Glases sich prinzipiell in ihren Eigenschaften unterscheiden, da die eine Seite des Glasbands offen liegt, die andere Seite aber im Kontakt mit dem Zinnbad steht. Dies führt unter anderem zu einer Zinn-Kontamination der auf dem Zinnbad liegenden Seite des Glases.

Mit dem Down-Draw-Verfahren lassen sich demgegenüber Glasbänder mit völlig gleichartigen Oberflächen erzeugen. Auch ist das Down-Draw-Verfahren besonders gut für die Herstellung sehr dünner Gläser und breiter Glasbänder geeignet.

Beim Down-Draw sorgt ein Ziehtank für eine Vergleichmäßigung der Glasverteilung bis zu einem Düsenschlitz, durch den das Glas mit Heißformgebungstemperatur austritt. Beim Down-Draw ohne Leitkörper (auch als Schwertkörper der Innendüse bezeichnet) haben die hergestellten Produkte eine schlechtere Oberflächenqualität, insbesondere bei der Feinwelligkeit ("waviness") aufgrund der kurzen Verweildauer des Glases im Bereich der Ziehzwiebel. Unebenheiten, welche an der Abrisskante des Glases am Düsenausgang entstehen, können so nicht effektiv ausgeheilt werden. Weiterhin erfordert das Verfahren in dem Fall eine Schlitzform der Düse, die an die jeweils angestrebte zu produzierende Dicke angepasst werden muss. Im Falle eines Wechsels der zu produzierenden Dickenformate führt dies zu Ausfall durch Rüstzeiten und erhöhten Materialbedarf.

Eine Verbesserung bringt die Verwendung eines Leitkörpers. Generell kann aber der Leitkörper die Strömung der Glasschmelze im Ziehtank beeinflussen, so dass es zu Dickenschwankungen und Glasfehlern, wie insbesondere Schlieren kommen kann.

Der Erfindung liegt daher die Aufgabe zugrunde, eine in Bezug auf die Formtreue des Glasbands und die Vermeidung von Glasfehlern verbesserte Anordnung zum Ziehen von Glasbändern und ein entsprechendes Verfahren anzugeben. Diese Aufgabe wird durch den Gegenstand der unabhängigen Ansprüche gelöst. Vorteilhafte Weiterbildungen sind in den jeweiligen abhängigen Ansprüchen angegeben. Demgemäß sieht die Erfindung eine Vorrichtung zum Ziehen von Glasbändern aus einer Glasschmelze vor, wobei die Vorrichtung einen Ziehtank zur Aufnahme einer Glasschmelze aufweist, welcher eine untere, vorzugsweise spalt-, beziehungsweise schlitzförmige Düsenöffnung aufweist, durch welche die Glasschmelze nach unten austreten kann. Die Vorrichtung weist weiterhin einen Leitkörper auf, der aus der Düsenöffnung des Ziehtanks nach unten herausragt. Der Leitkörper ist zu den Rändern der Düsenöffnung beabstandet gehaltert, so dass zwischen dem Leitkörper und den Rändern der Düsenöffnung zwei Düsenspalte gebildet werden. Dabei ist der Leitkörper an zwei gegenüberliegenden Enden entlang der Düsenöffnung freitragend aufgehängt, beziehungsweise gelagert.

Bei einer freitragenden Aufhängung können sich Teile der Vorrichtung besonders bei großen Glasband-Breiten durch die mechanische Belastung im Verlauf des Ziehprozesses bei den hohen Temperaturen im Laufe der Zeit durch Kriechen verformen, was sich auf die Geometrie der Düse und des Leitkörpers auswirkt. Dieses Problem tritt besonders dann auf, wenn Gläser mit hohen Erweichungstemperaturen verarbeitet werden sollen. Dazu ist in einer bevorzugten Weiterbildung vorgesehen, dass der Leitkörper als Trägermaterial ein feinkornstabilisiertes Metall aufweist.

Dadurch, dass sich der Leitkörper freitragend entlang des Düsenschlitzes erstreckt, also Halterungen oder Streben für den Leitkörper im von der Glasschmelze ausgefüllten Inneren des Ziehtanks vermieden werden, wird der Fluss der Glasschmelze nicht durch derartige Strukturen beeinflusst. Damit wird ein sehr gleichmäßiger Glasfluss und eine entsprechend homogene Dicke des abgezogenen Glasbands erzielt. Durch das Eigengewicht des Leitkörpers einerseits und durch das Abziehen des Glasbands andererseits wirken durch die endseitige Aufhängung allerdings Biegemomente auf den Leitkörper ein, die zu einer Kriechverformung des Leitkörpers führen können. Dieser Kriechverformung wird mit dem feinkornstabilisierten Metall in der tragenden Struktur des Leitkörpers entgegengewirkt.

Mit der vorstehende beschriebenen Anordnung kann ein Verfahren zur Herstellung eines Glasbands durchgeführt werden, bei welchem eine Glasschmelze einem Ziehtank zugeführt wird, wobei der Ziehtank eine untere Düsenöffnung für den Austritt der Glasschmelze aufweist, wobei in der Düsenöffnung ein Leitkörper angeordnet ist, der aus der Düsenöffnung des Ziehtanks nach unten herausragt, wobei der Leitkörper zu den Rändern der Düsenöffnung beabstandet gehaltert ist, so dass zwischen dem Leitkörper und den Rändern der Düsenöffnung zwei Düsenspalte gebildet werden, wobei der Leitkörper an zwei gegenüberliegenden seitlichen Enden und entlang der Düsenöffnung, beziehungsweise entlang deren Längsrichtung freitragend aufgehängt ist, und wobei die Glasschmelze in zwei Teilströmen aus den Düsenspalten aus dem Ziehtank austritt und am aus der Düsenöffnung herausragenden Teil des Leitkörpers entlangläuft, wobei sich die Teilströme am unteren Ende des Leitkörpers in einer Ziehzwiebel vereinigen, von welcher das Glasband abgezogen wird, und wobei durch das Abziehen des Glasbands eine Zugkraft auf den Leitkörper ausgeübt wird, welche von der Aufhängung des Leitkörpers an dessen seitlichen Enden aufgefangen wird.

Das Down-Draw-Verfahren mit Leitkörper ermöglicht einen im Vergleich zum Ziehen von Glasbändern ohne Leitkörper erhöhten Glasdurchsatz durch die im Vergleich größere Ziehtanköffnung und eine bessere Oberflächenqualität am Produkt. Diese wird durch die verlängerte Verweildauer auf dem Leitkörper nach Düsenaustritt hervorgerufen. Weiterer Vorteil ist, dass in dem Fall mit erhöhter Temperatur im Düsenbereich gearbeitet werden kann, weil die Formgebungsviskositäten $10^{3.5}$ dPa·s bis $10^{4.5}$ dPa·s nun nicht im Düsenschlitz sondern erst an der Unterkante des Leitkörpers erreicht werden brauchen. Im Falle von kristallisationsempfindlichen Gläsern und Glaskeramiken ist dies sehr vorteilhaft und führt zu erhöhten Ausbeuten. Die Vorteile des Down-Draw-Verfahren, ob ohne oder mit Leitkörper gegenüber dem Overflow-Fusion-Prozess mit Überlauftrog auf Keramik sind, dass keine oder nur eine verminderte Mittelschliere (die durch Keramik des Troges erzeugt wird) vorhanden ist. Die Glaszusammensetzungs-Homogenität entlang der Dicke ist damit sehr hoch. Durch die hier vorgesehene freitragende Aufhängung werden auch durch den Leitkörper keine Inhomogenitäten im Glas verursacht. Weiterhin bietet das Verfahren eine hohe Flexibilität, weil nach Abstoppen des Prozesses ein Wechsel und anschließender Wiedereinsatz der Werkzeuge möglich ist. Zusätzlich ist im Vergleich die Bortendicke vermindert, was unter anderem ein Umlenken des Bandes in die Horizontale zur Weiterverarbeitung nach Kühlofenausgang vereinfacht und insbesondere auch die Wirtschaftlichkeit und Ausbeute erhöht.

Gemäß einer Ausführungsform werden für den Leitkörper, sowie gegebenenfalls auch für den Ziehtank, insbesondere im Bereich der Düsenöffnung zumindest eine der folgenden Edelmetalllegierungen in feinkornstabilisierter Form verwendet: $Pt_xRh_yAu_z$ mit 0%<=x<=100%, 0%<=y<=20%, 0%<=z<=20%), $Pt_uIr_v$-Legierungen mit 0%<=u<=100%, 0%<=v<=20%. Diese Legierungen sind bei hohen Temperaturen >1100°C, besonders kritisch >1250°C ohne Feinkornstabilisierung nicht mehr vollständig stabil gegen Kriechprozesse, welches zu einer mit der Zeit zunehmenden Verformung der Werkzeuge führt. Mit der hier beschriebenen Anordnung ist hingegen generell, ohne Beschränkung auf die vorgenannten speziellen Legierungen ein Ziehen von Glasbändern aus Gläsern mit Formgebungstemperaturen oberhalb von 1100 °C möglich. Als Formgebungstemperatur wird dabei nach dieser Offenbarung eine Temperatur bezeichnet, bei der das Glas eine Viskosität von $10^4$ dPa·s aufweist.

Beim Downdraw-Verfahren mit Schwertkörper, beziehungsweise Leitkörper bilden Ziehtank, Schlitzdüse und Leitkörper ein System, welches die Dickenverteilung (Längs- und Querverteilung) des viskosen Glases beeinflusst. Hier ist eine gute Langzeitstabilität dieses Systems sehr vorteilhaft. Die hier beschriebene Anordnung ermöglicht den Einsatz des Downdraw-Verfahrens mit Leitkörper auch bei hohen Ziehkräften. Gemäß einer Ausführungsform ist dazu vorgesehen, dass das Glasband mit einer Zugkraft von größer 100 N pro 1000 mm Glasbandbreite von der Düse, beziehungsweise dem Ziehtank abgezogen wird. Dies ist sogar bei Gläsern mit einer Heißformgebungs-Temperatur größer als 1200°C möglich.

Beim Einsatz von Schwertern, beziehungsweise Leitkörpern mit Sandwichkonstruktion und feinkornstabilisierten Edelmetallanteilen in zugbelasteten Bauteilbereichen bei Heißformgebungs-Temperaturen von 1450°C wurden dabei auch nach mehr als zweiwöchigem Produktionsbetrieb keine qualitätskritischen Verformungen beobachtet.

Als Metalle des feinkornstabilisierten Trägermaterials eignen sich besonders Platin und Platinlegierungen, insbesondere Pt, PtRh, PtAu, PtRhAu, PtIr, vorzugsweise in den oben genannten prozentualen Anteilen. Das Trägermaterial kann schmelzmetallurgisch oder pulvermetallurgisch hergestellt werden. Zur Feinkornstabilisierung werden vorzugsweise Nanopartikel verwendet. Ein gut geeignetes Material der Feinkornpartikel ist $ZrO_2$. Die Feinkorn-Partikel können insbesondere beim Einschmelzen des Metalls oder dem Zusammenschmelzen der Legierung hinzugegeben und in der Schmelze verteilt werden. Generell können feinkornstabilisierte Elemente auch pulvermetallurgisch hergestellt werden. Dazu werden Metallpartikel und die Feinkorn-Partikel gemischt und die Mischung zusammengesintert.

Besonders stabil ist ein Leitkörper, der vollständig aus feinkornstabilisiertem Metall gefertigt ist.

Gemäß einer weiteren Ausführungsform kann der Leitkörper mehrteilig sein, wobei mindestens eines der Teile oder Elemente aus feinkornstabilisiertem Metall gefertigt ist. Insbesondere ist der Leitkörper dabei eine Sandwich-Konstruktion aus feinkornstabilisiertem Metall und einem weiteren Material. Das weitere Material kann ein Metall oder auch ein nichtmetallisches hochtemperaturfestes Material sein. Generell ist auch möglich, Keramiken mit stabilisierten/teilstabilisierten Legierungen abzudecken um die Zeitstandfestigkeit zu erhöhen und die Korrosion der Keramiken zu verhindern. Gemäß einer Ausführungsform umfasst der Leitkörper daher zumindest ein keramisches Element, welches mit dem feinkornstabilisierten Metall überzogen ist.

Die Variante eines vollständig aus feinkornstabilisiertem Metall hergestellten Leitkörpers besitzt den Vorteil erhöhter Stabilität. Nachteil sind erhöhte Materialkosten und verringerte Schweißbarkeit wegen der Aufschwimmeffekte der stabilisierenden Materialien und der erhöhten Sprödheit.

Die weitere Variante mit einer Sandwichstruktur des Leitkörpers oder einer Kombination mit nicht feinkornstabilisiertem Metall ist bezüglich der Materialkosten und Schweißbarkeit zu bevorzugen, allerdings sind die Standzeiterwartungen etwas geringer. Lieferanten von diesen stabilisierten Materialien sind z.B. Umicore, Furuya, Heraeus, Tanaka mit jeweils eigenen Versionen dieser Materialien (Umicore z.B. PtRh10 FKS Rigilit, PtRh10 FKS Saeculit - Heraeus z.B. PtRh10 DPH oder DPH-A, usw.). Hochkriechbeständige Edelmetalle wie reines Iridium sind weniger geeignet, da diese nicht oxidationsbeständig sind.

Kurzbeschreibung der Figuren

Die Erfindung wird nachfolgend genauer und anhand der beigeschlossenen Figuren erläutert.

Fig. 1 ist eine Querschnittansicht durch einen Ziehtank mit einem Leitkörper.
Fig. 2 zeigt einen Leitkörper mit Aufhängung und ein Glasband im Querschnitt.
Fig. 3 ist ein Längsschnitt durch den Ziehtank mit Schnittrichtung entlang der Düsenöffnung.
Fig. 4 ist eine perspektivische Ansicht eines Ziehtanks mit Leitkörper,
Fig. 5 zeigt ein Diagramm mit Messwerten der Fließgeschwindigkeit verschiedener Legierungen in Abhängigkeit der mechanischen Spannung.
Die Fig. 6 bis Fig. 10 zeigen Vorrichtungen mit verschiedenen Ausführungsformen von Leitkörpern.
Fig. 11 und Fig. 12 zeigen Ausführungsformen von Düsenöffnungen,
Fig. 13 zeigt eine Querschnittansicht eines Ziehtanks zur Verdeutlichung von Größen zur Berechnung des Druckabfalls im Ziehtank.

Ausführliche Beschreibung der Erfindung

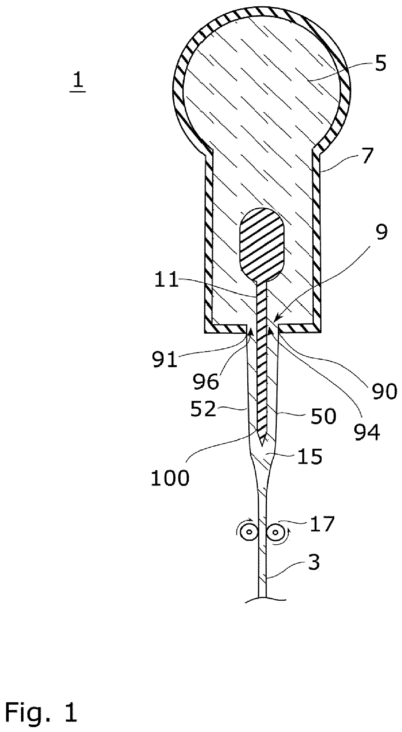

Fig. 1 zeigt Teile einer Vorrichtung 1 zum Ziehen von Glasbändern 3 aus einer Glasschmelze 5. Die Vorrichtung 1 weist einen Ziehtank 7 zur Aufnahme einer Glasschmelze 5 auf, welcher an dessen unteren Ende Düsenöffnung 9 aufweist, durch welche die Glasschmelze 5 nach unten austreten kann. Im Ziehtank 7 ist ein Leitkörper 11 angeordnet, der aus der Düsenöffnung 9 des Ziehtanks 7 nach unten herausragt. Mit dem durch die Düsenöffnung geführten Leitkörper 11 wird die Düsenöffnung 9 in zwei Düsenspalte 94, 96 untergliedert. Die Glasschmelze 5 tritt in zwei Teilströmen 50, 52 durch die Düsenspalte 94, 96 aus. Diese laufen am Leitkörper 11 entlang nach unten und vereinigen sich am unteren Ende des aus der Düsenöffnung 9 herausragenden Teils 100 des Leitkörpers 11. Dieser Bereich, in dem sich die beiden Teilströme vereinigen und von dem aus das Glasband durch Abziehen geformt wird, wird als Ziehzwiebel 15 bezeichnet. Beim Abziehen verringert sich die Dicke des Glasbands 3 durch das Ausziehen des Glases. Gleichzeitig wird das Glas mit steigender Entfernung von der Düsenöffnung 9 kälter und entsprechend viskoser, bis dieses erstarrt.
Allgemein ist es bevorzugt, wenn der Leitkörper 11 mindestens 30 mm, vorzugsweise mindestens 80 mm aus der Düsenöffnung 9 herausragt. Auf diese Weise wird eine gute Verteilung der Glasschmelze auf dem Leitkörper 11 ermöglicht, so dass Dickenschwankungen im Glasband unterdrückt werden.
Ohne Beschränkung auf das gezeigte Beispiel kann es günstig sein, wenn der Leitkörper 11 einen Widerstandskörper 101 aufweist, der im Inneren des Ziehtanks 7 angeordnet ist und einen verbreiterten Abschnitt am oberen Ende des Leitkörpers 11 darstellt, welcher den Strömungsquerschnitt für die Glasschmelze 5 gegenüber dem sich unten anschließenden Teil des Leitkörpers 11 verengt. Dieser untere Teil des Leitkörpers 11 kann als Schwert oder Blatt 103 bezeichnet werden. Allgemein ist also in einer Ausführungsform der Erfindung vorgesehen, dass der Leitkörper 11 einen Widerstandskörper 101 und ein unter dem Widerstandskörper 101 angeordnetes Blatt 103 umfasst, wobei der Widerstandskörper 101 eine größere Breite als das Blatt 103 aufweist, um den Strömungsquerschnitt im Ziehtank 7 zu verengen.
Der Abstand von der Düsenöffnung 9 zur Unterkante des Strömungswiderstands, beziehungsweise des Widerstandskörpers 101 beträgt allgemein vorzugsweise mindestens 3 mm, bevorzugt mindestens 8 mm.
Um das Glasband 3 abzuziehen, kann eine Zugvorrichtung 17 vorgesehen sein. Diese kann beispielsweise ein oder mehrere Paare angetriebener Rollen umfassen. Durch das Abziehen wird eine Zugkraft auf das Glasband 3 ausgeübt, welche typischerweise zumindest größtenteils auf den Leitkörper 11 wirkt. Diese Zugkraft wirkt in gleicher Richtung und zusätzlich zur Gewichtskraft. Um den Leitkörper 11 zu verankern und die einwirkenden Kräfte abzufangen, kann der Leitkörper 11 im Ziehtank mit Verstrebungen gehaltert sein, die von der Glasschmelze 5 umflossen werden. Eine solche Halterung ist mechanisch sehr stabil. Allerdings hat sich gezeigt, dass diese negative Auswirkungen auf die Qualität des Glasbands 3 haben kann. Demgegenüber ist gemäß dieser Offenbarung allgemein vorgesehen, dass der Leitkörper 11 entlang zumindest eines mittleren Abschnitts der Düsenöffnung 9 freitragend aufgehängt ist. Insbesondere kann in einer Weiterbildung vorgesehen sein, dass beim Ziehen ein Glasband 3 ausgebildet wird, welches einen zentralen Bereich gleichmäßiger Dicke und zwei randseitige Borten mit gegenüber dem zentralen Bereich größerer Dicke aufweist, wobei der Leitkörper 11 so aufgehängt wird, dass dieser zumindest entlang des Abschnitts der Düsenöffnung, an welchem der zentrale Bereich gleichmäßiger Dicke ausgebildet wird, freitragend ist.

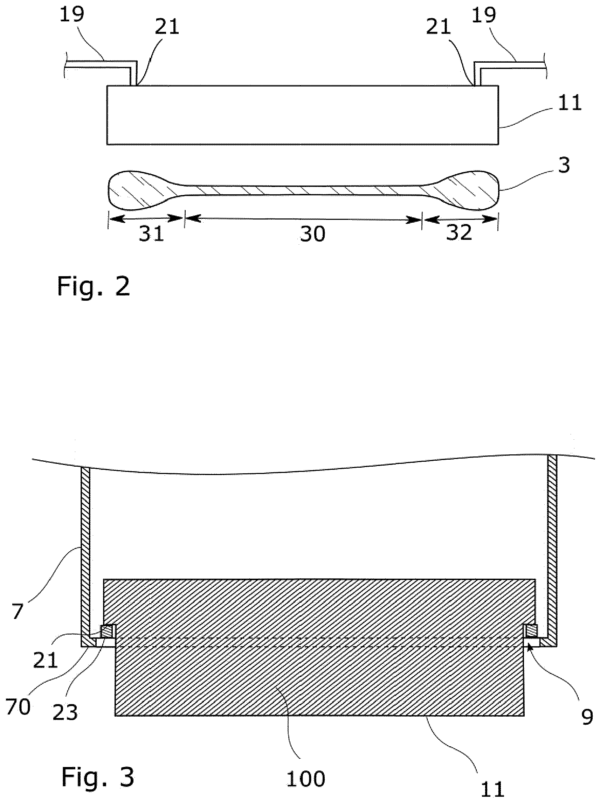

Fig. 2 zeigt dazu einen Leitkörper 11 mit Aufhängung gemäß einer Ausführungsform und ein Glasband 3 im Querschnitt. Das Glasband 3 weist einen zentralen Bereich 30 auf, entlang dem sich die Dicke des Glasbands 3 nicht oder nur wenig ändert, sowie randseitige Borten 31, 33. Der zentrale Bereich 30 bildet den sogenannten Qualitätsbereich, aus dem die zu fertigenden Glasprodukte hergestellt werden. Typischerweise werden die Borten 31, 33 abgetrennt und das Glas der Borten kann erneut eingeschmolzen und dem Ziehtank 7 zugeführt werden. Die Aufhängung des Leitkörpers 11 erfolgt mit einer Halterung 19. Die Auflagebereiche 21 an denen der Leitkörper 11 die auf diesen einwirkenden Kräfte auf die Halterung 19 weitergibt, sind so weit randseitig angeordnet, dass diese Bereiche außerhalb des Qualitätsbereichs, beziehungsweise des zentralen Bereichs 30 liegen. Zwischen diesen Bereichen 21 ist der Leitkörper 11 freitragend, es sind also keine weiteren Aufhängepunkte vorhanden. Fig. 3 zeigt eine spezielle Ausgestaltung dieser Ausführungsform.

Fig. 3 ist eine schematische Schnittansicht durch den Ziehtank mit Schnittrichtung mittig entlang der Düsenöffnung 9 mit einer vertikal liegenden Schnittebene. Auf dem Boden 70 des Ziehtanks 7, in dem auch die Düsenöffnung vorhanden ist, sind Auflageelemente 23 eingelegt, auf denen wiederum der Leitkörper 11 aufliegt. Die Auflageelemente 23 können dabei wie dargestellt im Bereich der Düsenöffnung 9 eingelegt sein und die Düsenöffnung 9 überspannen. Die Auflagepunkte des Leitkörpers 11 auf den Auflageelementen 23 bilden die Halterungsbereiche, insbesondere Auflagebereiche 21 für den Leitkörper 11.

Allgemein, ohne Beschränkung auf das dargestellte Beispiel ist dazu in einer Ausführungsform der Erfindung vorgesehen, dass der Leitkörper 11 in der Ziehdüse auf Halteelementen 23 aufliegt und zwischen den Auflagebereichen 21 auf den Halteelementen 23 freitragend gehalten wird.

Der Leitkörper 11 wird dabei allgemein bevorzugt so ausgelegt, dass dieser sich nicht erheblich durchbiegt, wenn das Glasband mit einer Zugkraft von größer 100 N pro 1000 mm Glasbandbreite vom Ziehtank 7 abgezogen wird.

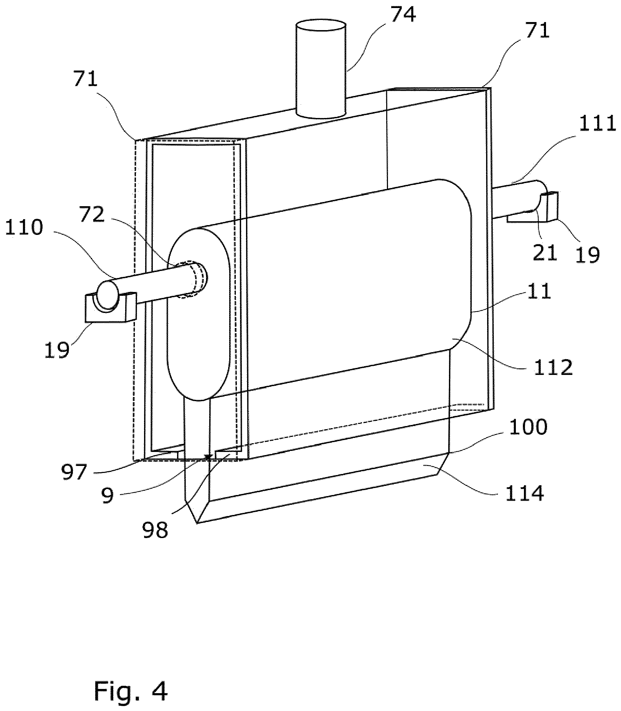

Fig. 4 zeigt schematisch ein Beispiel einer weiteren, besonders bevorzugten Ausführungsform. Der Ziehtank 7 ist hier in perspektivischer Ansicht dargestellt. In dieser Darstellung ist auch ein Zulauf 74 gezeigt, durch welche die Glasschmelze in den Ziehtank 7 eingeführt wird. Der Ziehtank 7 ist in diesem Beispiel seitlich durch zwei Abschlussplatten 71 geschlossen. Die Abschlussplatten 71 weisen Öffnungen 72 auf, durch welche Ausleger oder Kragarme 110, 111 des Leitkörpers 11 hindurchragen. Diese Kragarme 110, 111 liegen auf außerhalb des Ziehtanks 7 angeordneten Halterungen 19 auf. Die Auflagebereiche 21, zwischen denen der Leitkörper 11 freitragend aufgehängt ist, liegen mithin außerhalb des Ziehtanks 7 und damit auch außerhalb der im Ziehtank 7 nach unten ablaufenden Glasschmelze. Ohne Beschränkung auf das dargestellte Beispiel ist also in einer Ausführungsform der Vorrichtung zum Ziehen von Glasbändern vorgesehen, dass der Leitkörper 11 außerhalb des Ziehtanks 7 gehaltert ist. Insbesondere verläuft dabei der Leitkörper entlang des gesamten Innenraums des Ziehtanks 7 freitragend. Auf diese Weise wird vermieden, dass der Glasstrom durch die Halterung beeinflusst wird. Dies stellt eine gleichbleibende Glasqualität sicher und vermeidet die Bildung von Schlieren.

Diese Anordnung hat auch noch einen weiteren Vorteil. Die Halterung des Leitkörpers 11 ist auf diese Weise vom Ziehtank 7 so entkoppelt, dass Teile des Ziehtanks gewechselt werden können, ohne den Leitkörper 11 zu entfernen. Dies betrifft insbesondere den Düsenspalt, beziehungsweise die Teile des Ziehtanks 7, welche den Düsenspalt 9 formen. Im dargestellte Beispiel können die Bodenbleche 97, 98 oder allgemeiner Teile der Wandung, welche die Bodenbleche umfassen, ausgetauscht werden, ohne den Leitkörper 11 zu entfernen. Auf diese Weise können die Bodenbleche so ausgetauscht werden, dass sich die Breite der Düsenöffnung 9 ändert, ohne dass beim Austausch der Leitkörper 11 bewegt werden muss. Ohne Beschränkung auf das spezielle Beispiel der Fig. 4 ist daher in einer Weiterbildung der Erfindung vorgesehen, dass der Ziehtank so ausgebildet ist, dass die Teile des Ziehtanks 7, welche die Düsenöffnung 9 formen, ausgetauscht werden können, während der Leitkörper 11 in seiner Halterung an Ort und Stelle verbleibt.

Bei einer freitragenden Halterung des Leitkörpers 11 kann es allerdings besonders bei heißen Glasschmelzen im Laufe der Zeit unter der Einwirkung der Gewichtskraft und der von der Zugvorrichtung 17 ausgeübten Kräfte zu einer Kriechverformung kommen. Zur Verringerung des Kriecheffektes bei Bauteil-Belastung durch hohe Temperaturen, Eigengewicht und Ziehkraft und Erhöhung der Prozessstabilität beim Schwertkörper und Düsenmaterial und um so die Standzeit der Vorrichtung 1 zu erhöhen, ist in einer bevorzugten Ausführungsform vorgesehen, dass der Leitkörper 11 ein feinkornstabilisiertes Metall umfasst.

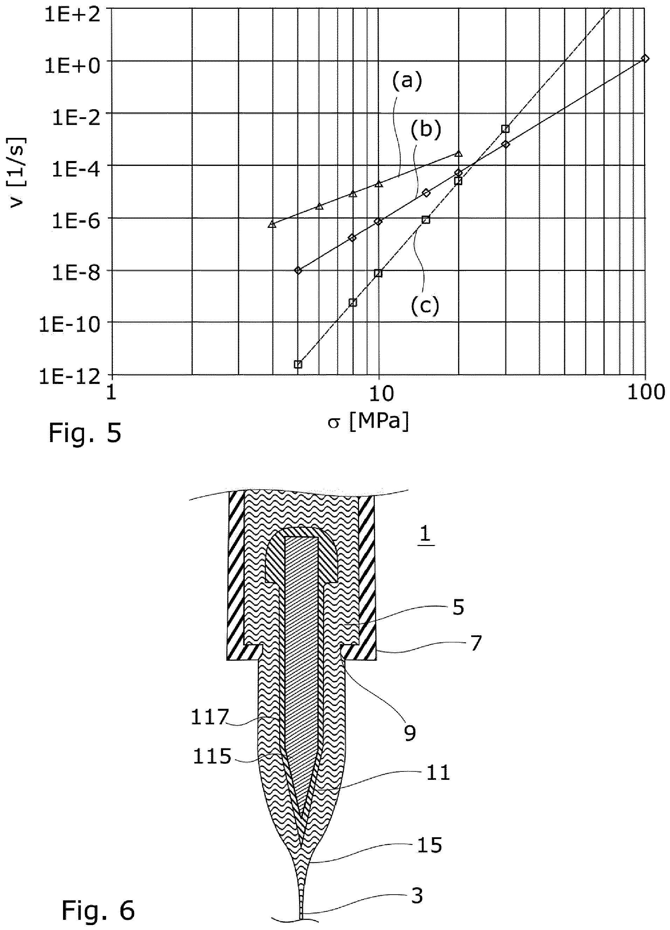

Fig. 5 zeigt dazu ein Diagramm mit Messwerten der Kriechrate v verschiedener für die Glasherstellung geeigneter Legierungen in Abhängigkeit einer angelegten mechanischen Spannung σ. Alle Meßwerte wurden bei einer Temperatur des Werkstoffs von 1400 °C aufgenommen. Die Kurve (a) zeigt die Meßwerte für eine herkömmliche, nicht feinkornstabilisierte Platin-Rhodium Legierung. Die Kurven (b) und (c) sind Meßwerte zweier unterschiedlicher feinkornstabilisierter Legierungen. Bei einer mechanischen Spannung von 5 MPa liegt die Kriechrate der Legierung zu Kurve (b) bereits zwei Größenordnungen unterhalb der des nicht feinkornstabilisierten Materials. Bei dem Material zu den Meßwerten der Kurve (c) sind dies sogar mehr als 5 Größenordnungen, wobei die Kriechrate mit steigender Spannung allerdings schneller ansteigt, als bei einem nicht feinkornstabilisierten Material. Die Eigenschaften feinkornstabilisierter Legierungen können dabei durch die Menge, Art und Größe der zur Stabilisierung hinzugegebenen Partikel beeinflusst und eingestellt werden. Die Verwendung einer feinkornstabilisierten Legierung für den Leitkörper ermöglicht jedenfalls die Verarbeitung von Gläsern mit einer Formgebungstemperatur von mehr als 1100 °C, sogar von 1400 °C und mehr, wie anhand von Fig. 5 ersichtlich ist.

Beispiele von feinkornstabilisierten Metallen sind die unter den Bezeichnungen PtRh10 FKS Rigilit, PtRh10 FKS Saeculit von Umicore und PtRh10 DPH oder DPH-A von Heraeus vertriebenen Materialien. Neben der den Meßwerten aus Fig. 5 zugrundeliegenden PtRh-Legierungen können auch Pt, PtAu, PtRhAu und PtIr für das feinkornstabilisierte Material verwendet werden. Allgemein können die stabilisierenden Partikel oxidische Partikel sein oder umfassen. Geeignet sind beispielsweise $ZrO_2$-Partikel.

Hochkriechbeständige Edelmetalle wie reines Iridium sind als Alternative nicht bevorzugt, da diese im Allgemeinen weniger oxidationsbeständig sind. Generell ist auch möglich, Keramiken mit stabilisierten/teilstabilisierten Legierungen zu überziehen um die Zeitstandfestigkeit zu erhöhen und die Korrosion der Keramiken zu verhindern.

Gemäß einer Ausführungsform wird der Leitkörper 11 vollständig aus feinkornstabilisiertem Material hergestellt. Damit wird eine besonders hohe Kriechresistenz bei hohen Temperaturen erzielt. Allerdings erhöhen sich die Materialkosten. Auch ist das Schweißen von Teilen aus feinkornstabilisierten Legierungen nicht einfach, da es zu Aufschwimmeffekten der stabilisierenden Partikel kommen kann, die im Schweißbereich die Stabilität deutlich vermindern können. Auch sind diese stabilisierten Metalle durch die im Gefüge vorhandenen Partikel spröder als nicht stabilisierte Werkstoffe.

Gemäß einer anderen Ausführungsform ist daher vorgesehen, einen mehrteiligen Leitkörper 11 vorzusehen, der mindestens ein Element aus feinkornstabilisiertem Metall aufweist. Ein mehrteiliger Aufbau ist von Vorteil aufgrund der geringeren Materialkosten, allerdings sind die Standzeiten etwas geringer. Der Leitkörper kann dabei insbesondere eine Sandwich-Konstruktion aus feinkornstabilisiertem Metall und mindestens einem weiteren Material sein. Die kriechende Verformung ist insbesondere relevant in stark zugbelasteten Bereichen. Daher ist gemäß einer Weiterbildung vorgesehen, dass der Leitkörper 11 mehrteilig ist, wobei ein unteres Element des Leitkörpers 11 ein Element aus feinkornstabilisiertem Material ist. Der Begriff eines "unteren Teils" bezieht sich dabei auf die Lage des Teils bei montiertem Leitkörper 11.

Bei dem Beispiel der Fig. 4 umfasst der Leitkörper 11 ein oberes, hier verdickt ausgebildetes Element 112 und ein unteres Element 114, welches auch den aus der Düsenöffnung 9 herausragende Teil 100 des Leitkörpers 11 umfasst. Dieses untere Element 114 ist durch das Eigengewicht des Leitkörpers 11 und die von der Zugvorrichtung 17 auf das Glasband ausgeübte Kraft zugbelastet. Wie bei dem Beispiel der Fig. 1 bildet das Element 112 aufgrund seiner Verdickung einen Widerstandskörper 101. Der untere, aus der Düsenöffnung herausragende Teil 100 ist als Blatt 103 geformt.

Im Folgenden werden verschiedene Ausführungsformen der Form und des Aufbaus von Leitkörper 11 und Düsenöffnung 9 näher erläutert. Generell kann die Form der Werkzeuge optimiert werden, um deren Stabilität zu verbessern. Auch können der Druckverlauf angepasst und die Durchmischung der Glasschmelze verbessert werden.

Ist der Leitkörper 11 beispielsweise als einfaches, zu dünnes Blech innerhalb des Düsenschlitzes ausgebildet, dann kann unter hoher Last, etwa bei größer 100 N pro 1000 mm Glasbandbreite und hoher Temperatur von 1200°C und mehr eine Instabilität längs und quer zur Ziehrichtung entstehen. Dies führt zu Schwankungen der Düsenschlitzbreite und damit zu Instabilitäten im Ziehverfahren. Mit Hilfe einer Anpassung der Form des Leitkörpers 11 kann die Stabilität hinreichend erhöht werden.

Fig. 6 zeigt eine Ausführungsform einer Vorrichtung 1 zum Ziehen von Glasbändern 3 mit einem Leitkörper 11, der ebenfalls wie bei dem in Fig. 4 gezeigten Beispiel einen verdickten oberen Teil aufweist. Dieser obere Teil ist im Beispiel der Fig. 6 pilzförmig ausgebildet. Auch das Beispiel der Fig. 6 zeigt weiterhin einen mehrteiligen Leitkörper 11. In diesem Fall sind die einzelnen Elemente aber nicht aufeinandergesetzt, wobei ein unteres Element 114 aus feinkornstabilisiertem Metall gefertigt ist. Das in Fig. 6 gezeigte Beispiel des Leitkörpers 11 ist vielmehr als Sandwich-Konstruktion aufgebaut. Allgemein ist dazu wie im gezeigten Beispiel ein Leitkörper 11 vorgesehen, der ein Innenteil 115 aufweist, welches von einer Verkleidung 117 umgeben ist. Dabei ist die Auskleidung vorzugsweise aus feinkornstabilisiertem Metall gefertigt. Auf diese Weise können für das Innenteil 115 sogar Materialien verwendet werden, die für einen Glaskontakt nicht erwünscht oder nachteilig wären. So kann der Leitkörper 11 zumindest ein keramisches Element umfassen, welches mit dem feinkornstabilisierten Metall überzogen ist. In diesem Fall ist also dann das Innenteil 115 aus einem keramischen Material und die Verkleidung 117 aus feinkornstabilisiertem Metall.

Eine weitere Möglichkeit besteht darin, für den Kern, beziehungsweise das Innenteil 115 ein hoch kriechfestes Metall zu verwenden, das aber weniger für den Kontakt mit der Glasschmelze 5 geeignet ist. Hier kommen die bereits genannten hochkriechbeständigen Edelmetalle, wie insbesondere reines Iridium in Betracht. Gemäß einer Ausführungsform ist daher vorgesehen, dass der Leitkörper ein Innenteil 115 aus Iridium umfasst, der von einer Verkleidung 117 umgeben ist. Die Verkleidung 117 kann dann wiederum zumindest in zugbelasteten Bereichen ein feinkornstabilisiertes Metall umfassen.

Die Einstellung der Druckbedingungen kann über die Geometrie des Systems aus Düsenschlitz und Strömungswiderstand innerhalb des Ziehtanks erfolgen. Der Strömungswiderstand sorgt zusammen mit dem statischen Druck für einen gewünschten Überdruck am Ziehtank-Ende, beziehungsweise an der Düsenöffnung. Dies sorgt für eine homogene Glasverteilung auf dem Schwertkörper. Mithilfe der geometrischen Auslegung des Strömungswiderstandes am Leitkörper im Ziehtank und der Düsenschlitzweite (jeweils der Abstand Schlitzdüse zu Leitkörper am Ziehtankausgang) kann der Druckabfall so eingestellt werden, dass sich die Glasschmelze am Düsenaustritt kaum aufweitet und dadurch die Benetzung der Düsenschlitzunterkante vermieden wird.

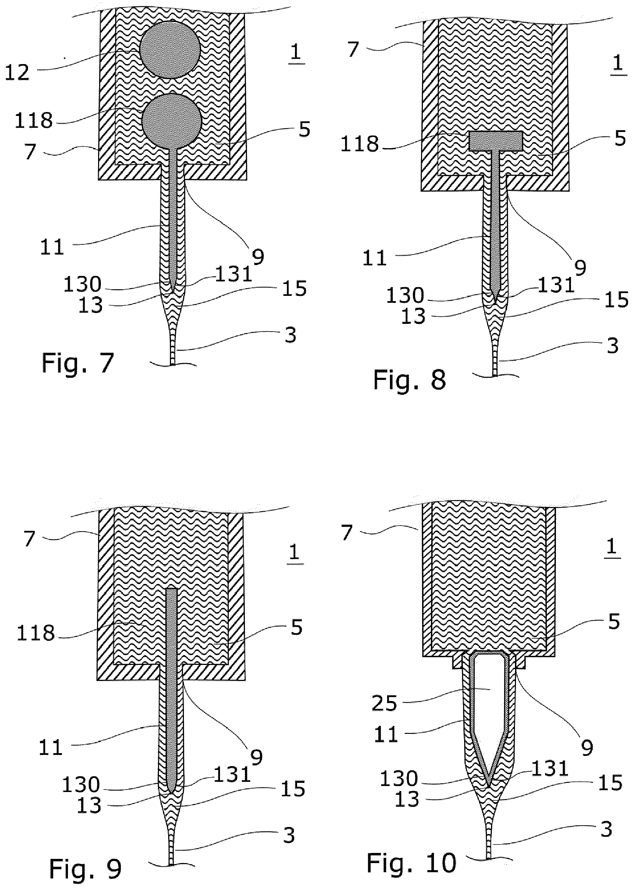

Fig. 7 zeigt dazu ein Beispiel einer weiteren Ausführungsform. Dieses Beispiel basiert prinzipiell darauf, dass oberhalb des aus der Düsenöffnung 9 herausragenden Leitkörpers 11 und mit einem Zwischenraum zu diesem aus der Düsenöffnung 9 herausragenden Leitkörper 11 ein weiterer, innerhalb des Ziehtanks 7 vorzugsweise ebenfalls freitragend verlaufender Leitkörper 12 angeordnet ist. Dieser weitere Leitkörper 12 dient der zusätzlichen Durchmischung der Glasschmelze 5. Insbesondere kann mit einem solchen zusätzlichen Leitkörper 12 aber auch der Strömungswiderstand für die Glasschmelze 5 beeinflusst werden.

Die Einstellung der Düsenschlitzweite beeinflusst auch die Größe des Abrisswinkels an der Düsenunterkante. Wird dieser Winkel zu klein, kann es zur Benetzung mit Glas unterhalb der Düsenkante kommen, was zur Kristallisation und Glasfehlern führen kann. Ohne Beschränkung auf die Ausführungsbeispiele ist daher in einer Ausführungsform der Erfindung vorgesehen, dass der Druckabfall der Glasschmelze 5 im Ziehtank so eingestellt wird, dass eine Benetzung von an die Düsenöffnung 9 angrenzenden Bereichen der Unterseite des Ziehtanks 7 vermieden wird. Der Druckabfall kann neben der Position und Form des oder der Leitkörper auch durch die Temperatur der Glasschmelze eingestellt werden.

Ein weiterer Vorteil eines innenliegenden Strömungswiderstandes in Form des Leitkörpers 11, gegebenenfalls auch eines weiteren Leitkörpers 12 im Ziehtank 7 liegt auch in der verringerten Empfindlichkeit der Glasqualität (z.B. in Bezug auf Dickenschwankungen) im Falle von vorhandenen oder entstehenden, standzeitbedingten Werkzeugverformungen bei Langzeiteinsatz (z.B. Ausgleich von Ziehtankbeulen, Absenken des Schwertkörpers, Schrägstellung Schwertkörper,...) weil unterhalb des innenliegenden Strömungswiderstandes eine Art Ausgleichsvolumen entsteht in der sich die Querverteilung der Glasmasse homogenisieren kann, bevor dies durch den Düsenschlitz fließt (nur bei Dickenverhältnis Schwertblatt/Strömungswiderstand im Ziehtank <1).

Mittels der hier beschriebenen Anpassungen kann eine Erhöhung der Standzeit der Werkzeuge um mindestens eine Größenordnung erreicht werden, was sich in der Stabilisierung der Produktqualität und auch einer Kostenersparnis niederschlägt. Weiterhin ist ebenso eine Erhöhung der Bandbreiten möglich, da Geometrieanpassungen und der Einsatz stabilisierter Legierungen bewirken, dass sich die Ziehkörper bei dann erhöhten Zugbelastungen weniger stark verbiegen bzw. kriechen. Zur längeren Standzeit trägt allgemein auch die mechanisch stabilisierende Verdickung des Leitkörpers 11 im Ziehtank 7 bei, wie sie die bisher dargestellten Ausführungsbeispiele aufweisen. Ohne Beschränkung auf die speziellen Ausführungsbeispiele ist daher in einer Weiterbildung vorgesehen, dass der Leitkörper 11 innerhalb des Ziehtanks 7 eine größere Dicke aufweist, als an der Düsenöffnung 9. Bei dem in Fig. 7 gezeigten Beispiel ist die Verdickung 118, welche auch einen Widerstandskörper 101 bildet, zylinderförmig.

Um instabile Strömungen am Ende des Leitkörpers 11 zu vermeiden, ist wie auch bei den bisher gezeigten Beispielen der Fig. 1, Fig. 4, Fig. 6 und Fig. 7 vorgesehen, eine spitz zulaufende Abrisskante 13 am unteren Ende des Leitkörpers 11 von Vorteil. Mit anderen Worten bildet die Abrisskante 13 eine Schneide. Die in die Abrisskante 13 mündenden Flächen 130, 131 können dabei aber eben, konvex oder konkav geformt sein. Bei dem Beispiel der Fig. 7 sind die Flächen 130, 131 eben geformt.

Fig. 8 zeigt ein Beispiel eines Leitkörpers, der eine plattenförmige Verdickung 118 aufweist, so dass das obere Ende des Leitkörpers 11 T-förmig ausgebildet ist. Das Beispiel zeigt weiterhin in die Abrisskante 13 mündende Flächen 130, 131, die hier konkav geformt sind.

Die Verdickung ist aus mechanischen Gründen vorteilhaft, aber nicht zwingend. Fig. 9 zeigt ein Ausführungsbeispiel, bei welchem der Leitkörper 11 im Inneren des Ziehtanks 7 nicht gegenüber seiner Dicke im Bereich des Düsenspalts verdickt ist. Vielmehr hat der Leitkörper 11 hier die Gestalt eines Schwerts oder einer Platte mit im Wesentlichen gleichbleibender Dicke und einer in einer Abrisskante 13 mündenden Schneide mit den Flächen 130, 131an dessen unterem Ende. Unter anderem hat diese Ausführungsform den Vorteil, dass der Leitkörper 11 bei geeigneter Aufhängung einfach aus der Düsenöffnung 9 entnommen werden kann. Ohne Einschränkung auf die dargestellten Beispiele und auch unabhängig davon, ob der Leitkörper 11 eine Verdickung 118 aufweist, hat mindestens der sich durch die Düsenöffnung 9 erstreckende Teil des Leitkörpers 11 vorzugsweise eine Dicke im Bereich von 0,5 mm bis 20 mm.

Weiterhin ist es auch nicht in allen Ausführungsformen der Vorrichtung zwingend, dass der Leitkörper 11 sich bis in das Innere des Ziehtanks 7 hinein erstreckt. Vielmehr kann dessen oberes Ende auch in der Düsenöffnung 9 liegen. Eine solche Ausführungsform zeigt Fig. 10. Auch hier besteht der Vorteil, dass der Leitkörper 11 in einfacher Weise, gegebenenfalls sogar im laufenden Betrieb ausgetauscht werden kann. Allerdings wird der Strömungswiderstand hier im Wesentlichen nur durch die verbleibenden Spaltbreiten der Düsenöffnung 9 begrenzt. Gerade bei einem dickeren Leitkörper, wie ihn das Beispiel der Fig. 10 zeigt, kann der Leitkörper 11 alternativ oder zusätzlich zu einem Sandwich-Aufbau auch zumindest teilweise hohl ausgebildet sein. Diese Möglichkeit ist bei dem Beispiel der Fig. 10 dargestellt, der Leitkörper 11 weist dementsprechend einen Hohlraum 25. Wird der Leitkörper 11 aus Blechen geformt, die einen Hohlraum 25 einschließen, weist dies den Vorteil eines vergleichsweise geringen Eigengewichts auf.

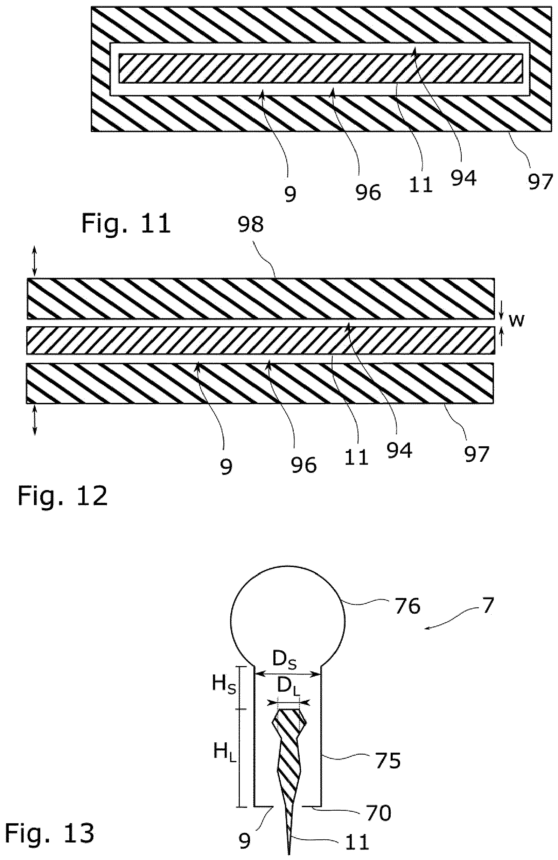

Die Düsenöffnung 9 kann, wie in der Aufsicht der Fig. 11 die Gestalt einer schlitzförmigen, insbesondere seitlich geschlossenen Öffnung in einem Bodenblech aufweisen. Der Leitkörper 11 wird dann wie dargestellt vorzugsweise berührungsfrei zu den Rändern der Öffnung mittig gehalten, so dass Düsenspalte 94, 96 gebildet werden. Deren Breite ist dabei durch die Breite der Düsenöffnung 9 und die Dicke des Leitkörpers 11 bestimmt.

Bei der in Fig. 12 gezeigten Ausführungsform ist eine zweigeteilte Düsenleiste mit einstellbarer Weite w der Düsenspalte 94, 96 vorgesehen. Dazu sind die Bodenbleche 97, 98 beweglich ausgelegt, so dass diese senkrecht zur Längsrichtung der schlitzförmigen Düsenöffnung 9 bewegbar sind. Die Bewegungsrichtung ist durch die an den Bodenblechen angezeichneten Doppelpfeile verdeutlicht. Allgemein, ohne Einschränkung auf das dargestellte Beispiel kann der Ziehtank also bewegliche Bodenbleche 97, 98 zur Einstellung des Abstands der Bleche zum Leitkörper 11 und damit zur Einstellung der Weite der Düsenspalte 94, 96 aufweisen. Dementsprechend kann das Verfahren zur Herstellung eines Glasbands 3 also auch den Schritt des Anpassens der Weite der Düsenspalte 94, 96 umfassen. Diese Anpassung kann beispielsweise zur Regelung des Durchsatzes und/oder der Glasbanddicke eingesetzt werden. Die Düsenschlitzweite, also die Breite dieser Düsenspalte liegt in Weiterbildung in einem Bereich von 4 mm bis 15 mm, besonders bevorzugt in einem Bereich von 6 mm bis 10 mm.

Eine weitere Möglichkeit zur Einstellung oder Regelung der Glasbanddicke besteht in der Einstellung der Temperatur der Glasschmelze. Hier ergibt sich ein besonderer weiterer Vorteil einer entlang des Ziehtanks freitragenden Aufhängung des Leitkörpers 11. Es besteht hier die Möglichkeit, über die Halterungen 19 des Leitkörpers oder separate Anschlüsse Strom zuzuführen und diesen direkt konduktiv zu beheizen. Der Strom durchfließt dann dementsprechend den Leitkörper 11 quer zur Zugrichtung des Glasbands, beziehungsweise auch und der Flussrichtung der Glasschmelze 5. Bei dem in Fig. 4 gezeigten Beispiel würde der Strom also von einer Halterung 19 durch den in der Halterung gehaltenen Kragarm 110 in den Leitkörper 11 eingekoppelt und über den gegenüberliegenden Kragarm 111 und die zugehörige Halterung 19 wieder aus dem Leitkörper 11 herausgeleitet.

Nach einer weiteren Ausführungsform der Erfindung wird zur Verbesserung der Formtreue des Glasbands der Druckabfall im Ziehtank in spezieller Weise eingestellt. Mit dieser Einstellung wird vermieden, dass sich ein Unterdruck im Ziehtank ausbildet. Ein solcher Unterdruck kann den Ziehtank mechanisch verformen, was sich auch auf die Glasdicke auswirken kann. Zudem kann ein lokaler Unterdruck zu instabilen Strömungen der Glasschmelze im Ziehtank führen, die ebenfalls inhomogene Glasdicken oder Glasfehler mit sich bringen können. Anhand der schematischen Schnittansicht des Ziehtanks 7 in Fig. 13 wird die Einstellung gemäß dieser Ausführungsform nun näher erläutert. Diese Figur zeigt eine Querschnittansicht eines Ziehtanks 7, in der Abmessungen dargestellt sind, die zur Berechnung des Druckabfalls im Ziehtank herangezogen werden.

Ähnlich wie bei dem Beispiel der Fig. 1 wird der obere Teil des Ziehtanks 7 durch einen rohrförmigen Abschnitt, beziehungsweise ein Verteilerrohr 76 gebildet, an welches sich ein Schacht 75 anschließt, der in den Boden 70 des Ziehtanks 7 mündet. Der Schacht 75 hat einen engeren Querschnitt als das Verteilerrohr 76. Dementsprechend ist die Weite $D_A$ des Schachts 75 kleiner als der Durchmesser des Verteilerrohrs 76. Druckänderungen erfolgen aufgrund des kleinen Querschnitts vor allem entlang des Schachts 75. Besonders tragen die Abschnitte bei, in denen der oder die Leitkörper 11 den Schacht weiter verengen. Gemäß einer Ausführungsform wird die Temperatur im Ziehtank so eingestellt, dass die folgende Bedingung erfüllt ist:

$$48\frac{\dot{v}}{B}\int_{H_L}\frac{\eta}{(D_S-D_L)^3}\,dz + 12\frac{\dot{v}}{B}\int_{H_S}\frac{\eta}{D_S^3}\,dz > \rho\cdot g\cdot h - p_u$$

In der obigen Beziehung bezeichnet v den Volumenstrom der Glasschmelze, B die Breite des Ziehtanks 7 in Richtung entlang der Düsenöffnung, beziehungsweise entlang des Glasbands senkrecht zur Zugrichtung, $\eta$ die Viskosität der Glasschmelze, $D_S$ die lokale Weite des Schachts 75, $D_L$ die lokale Dicke des Leitkörpers 11, $\rho$ die Dichte der Glasschmelze, g die Erdbeschleunigung und *h* die Höhe des Schachts 75. Die Integration erfolgt über die Abschnitte $H_L$ und $H_S$ in vertikaler Richtung z. Dabei kann die Integration auch über zwei oder mehrere Teilabschnitte erfolgen, wobei die Teilintegrale dann zu addieren sind. Dies ist der Fall, wenn mehrere Leitkörper vorhanden sind, die wie im Beispiel der Fig. 7 mit einem Abstand in vertikaler Richtung voneinander getrennt sind.

Das Symbol $p_u$ bezeichnet einen Druck in Höhe von 2000 Pa. Diese Größe berücksichtigt einen noch tolerierbaren Unterdruck. Auf der rechten Seite der Beziehung steht mithin der um den noch tolerierbaren Unterdruck $p_u$ verminderte hydrostatische Druck der Glasschmelze. Dieser Term ist eine Konstante. Der Vorfaktor $\dot{v}/B$ bestimmt die Dicke des Glasbandes. Diese wird vorgegeben, so dass der Vorfaktor ebenfalls eine Konstante darstellt. Regelbar ist dagegen bei vorgegebener Dicke des Glasbands über die Temperatur die stark temperaturabhängige Viskosität $\eta$. Die Temperaturregelung kann auch lokal unterschiedlich erfolgen. Ebenso kann die Temperatur im Ziehtank auch entlang der vertikalen Richtung variieren. Die Viskosität kann also auch ortsabhängig sein, $\eta=\eta(z)$. Diese Abhängigkeit kann entsprechend bei der Integration ebenfalls berücksichtigt werden.

Gemäß einer Ausführungsform ist also vorgesehen, dass der Ziehtank 7 einen Schacht 75 umfasst, in welchem der Leitkörper 11 angeordnet ist und der an seinem unteren Ende die Düsenöffnung 9 aufweist, wobei die Temperatur der Glasschmelze 5 im Ziehtank 7 so eingestellt wird, dass mit deren temperaturabhängiger Viskosität die oben angegebene Beziehung erfüllt ist.

Es ist dem Fachmann ersichtlich, dass die Erfindung nicht auf die in den Figuren beschriebenen speziellen Ausführungsbeispiele beschränkt ist, sondern in vielfältiger Weise variiert werden kann. Insbesondere können verschiedene Ausführungsformen auch miteinander kombiniert werden.

Bezugszeichenliste

| | |
|---|---|
| 1 | Vorrichtung zum Ziehen von Glasbändern |
| 3 | Glasband |
| 5 | Glasschmelze |
| 7 | Ziehtank |
| 9 | Düsenöffnung |
| 11, 12 | Leitkörper |
| 13 | Abrisskante |
| 15 | Ziehzwiebel |
| 17 | Zugvorrichtung |
| 19 | Halterung |
| 21 | Auflagebereich |
| 23 | Auflageelement |
| 25 | Hohlraum |
| 30 | zentraler Bereich von 3 |
| 31, 32 | Borten von 3 |
| 50, 52 | Teilströme von 5 |
| 70 | Boden von 7 |
| 71 | seitliche Abschlussplatte |
| 72 | Öffnung in 71 |
| 74 | Zulauf zu 7 |
| 75 | Schacht |
| 76 | Verteilerrohr |
| 90, 92 | Ränder von 94, 96 |
| 94, 96 | Düsenspalte |
| 97, 98 | Bodenbleche |
| 100 | Aus 9 herausragender Teil von 11 |
| 101 | Widerstandskörper |
| 103 | Blatt |
| 110, 111 | Kragarm von 11 |
| 112 | oberes Teil von 11 |
| 114 | unteres Teil von 11 |
| 115 | Innenteil von 11 |
| 117 | Auskleidung von 11 |
| 118 | Verdickung |
| 130, 131 | in Abrisskante 13 mündende Flächen von 11 |

**Patentansprüche**

1. Vorrichtung (1) zum Ziehen von Glasbändern (3) aus einer Glasschmelze (5), wobei die Vorrichtung (1) einen Ziehtank (7) zur Aufnahme einer Glasschmelze (5) aufweist, welcher eine untere Düsenöffnung (9) aufweist, durch welche die Glasschmelze (5) nach unten austreten kann, wobei die Vorrichtung einen Leitkörper (11) aufweist, der aus der Düsenöffnung (9) des Ziehtanks (7) nach unten herausragt, wobei der Leitkörper (11) zu den Rändern (90, 92) der Düsenöffnung (9) beabstandet gehaltert ist, so dass zwischen dem Leitkörper (11) und den Rändern (90, 92) der Düsenöffnung (9) zwei Düsenspalte (94, 96) gebildet werden, wobei der Leitkörper (11) entlang zumindest eines mittleren Abschnitts der Düsenöffnung (9) freitragend aufgehängt ist.

2.  Vorrichtung (1) gemäß dem vorstehenden Anspruch, **dadurch gekennzeichnet, dass** der Leitkörper (11) außerhalb des Ziehtanks (7) gehaltert ist und entlang des Innenraums des Ziehtanks (7) freitragend verläuft.

3.  Vorrichtung (1) gemäß einem der vorstehenden Ansprüche, **dadurch gekennzeichnet, dass** der Ziehtank (7) so ausgebildet ist, dass die Teile des Ziehtanks (7), welche die Düsenöffnung (9) formen, austauschbar sind, während der Leitkörper (11) in seiner Halterung an Ort und Stelle verbleibt.

4.  Vorrichtung gemäß einem der vorstehenden Ansprüche, **dadurch gekennzeichnet, dass** der Leitkörper (11) ein feinkornstabilisiertes Metall umfasst.

5.  Vorrichtung (1) gemäß dem vorstehenden Anspruch, **dadurch gekennzeichnet, dass** das feinkornstabilisierte Metall eine Legierung ist.

6.  Vorrichtung (1) gemäß einem der zwei vorstehenden Ansprüche, **gekennzeichnet durch** ein feinkornstabilisertes Metall mit zumindest einem der Merkmale:

    - das feinkornstabiliserte Metall ist eines der Metalle Pt, PtRh, PtAu, PtRhAu, PtIr,
    - das feinkornstabiliserte Metall enthält $ZrO_2$-Partikel.

7.  Vorrichtung (1) gemäß einem der vorstehenden Ansprüche, **gekennzeichnet durch** zumindest eines der Merkmale:

    - der Leitkörper (11) ist vollständig aus feinkornstabilisiertem Metall gefertigt,
    - der Leitkörper (11) ist mehrteilig und umfasst mindestens ein Element aus feinkornstabilisiertem Metall,
    - der Leitkörper ist eine Sandwich-Konstruktion aus feinkornstabilisiertem Metall und einem weiteren Material,
    - der Leitkörper (11) weist ein Innenteil (115) auf, welches von einer Verkleidung (117) umgeben ist
    - der Leitkörper umfasst zumindest ein keramisches Element, welches mit dem feinkornstabilisierten Metall überzogen ist,
    - der Leitkörper (11) ragt mindestens 30 mm, vorzugsweise mindestens 80 mm aus der Düsenöffnung (9) heraus,
    - der Leitkörper (11) weist innerhalb des Ziehtanks (7) eine größere Dicke auf, als an der Düsenöffnung (9),
    - die Abrisskante (13) am unteren Ende des Leitkörpers bildet eine Schneide.

8.  Vorrichtung (1) gemäß einem der vorstehenden Ansprüche, **dadurch gekennzeichnet, dass** oberhalb des aus der Düsenöffnung (9) herausragenden Leitkörpers (11) und mit einem Zwischenraum zum aus der Düsenöffnung (9) herausragenden Leitkörper (11) ein weiterer, Leitkörper (12) innerhalb des Ziehtanks (7) angeordnet ist.

9.  Vorrichtung gemäß einem der vorstehenden Ansprüche, **dadurch gekennzeichnet, dass** der Leitkörper (11) einen Widerstandskörper (101) und ein unter dem Widerstandskörper (101) angeordnetes Blatt (103) umfasst, wobei der Widerstandskörper (101) eine größere Breite als das Blatt (103) aufweist.

10. Verfahren zur Herstellung eines Glasbands (3), bei welchem eine Glasschmelze (5) einem Ziehtank (7) zugeführt wird, wobei der Ziehtank (7) eine untere Düsenöffnung (9) für den Austritt der Glasschmelze (5) aufweist, wobei im Ziehtank (7) ein Leitkörper (11) angeordnet ist, der aus der Düsenöffnung (9) des Ziehtanks (7) nach unten herausragt, wobei der Leitkörper (11) zu den Rändern (90, 92) der Düsenöffnung (9) beabstandet gehaltert ist, so dass zwischen dem Leitkörper (11) und den Rändern (90, 92) der Düsenöffnung (9) zwei Düsenspalte (94, 96) gebildet werden, wobei der Leitkörper (11) entlang zumindest eines mittleren Abschnitts der Düsenöffnung (9) freitragend aufgehängt ist, und wobei die Glasschmelze (5) in zwei Teilströmen (50, 52) aus den Düsenspalten (94, 96) aus dem Ziehtank (7) austritt und am aus der Düsenöffnung (9) herausragenden Teil (100) des Leitkörpers (11) entlangläuft, wobei sich die Teilströme am unteren Ende des Leitkörpers (11) in einer Ziehzwiebel (15) vereinigen, von welcher das Glasband (3) abgezogen wird, und wobei durch das Abziehen des Glasbands (3) eine Zugkraft auf den Leitkörper (11) ausgeübt wird, welche von der Aufhängung des Leitkörpers (11) an dessen seitlichen Enden (110, 111) aufgefangen wird.

**11.** Verfahren gemäß dem vorstehenden Anspruch, wobei beim Ziehen ein Glasband (3) ausgebildet wird, welches einen zentralen Bereich gleichmäßiger Dicke und zwei randseitige Borten (31, 33) mit gegenüber dem zentralen Bereich (30) größerer Dicke aufweist, **dadurch gekennzeichnet, dass** der Leitkörper (11) so aufgehängt wird, dass dieser zumindest entlang des Abschnitts der Düsenöffnung, an welchem der zentrale Bereich gleichmäßiger Dicke ausgebildet wird, freitragend ist.

**12.** Verfahren gemäß dem vorstehenden Anspruch, **dadurch gekennzeichnet, dass** ein Glasband (3) aus einem Glas gezogen wird, welches eine Formgebungstemperatur oberhalb von 1100 °C aufweist.

**13.** Verfahren gemäß einem der vorstehenden Ansprüche, **dadurch gekennzeichnet, dass** der Leitkörper (11) in der Ziehdüse (9) auf Halteelementen (23) aufliegt und zwischen den Auflagebereichen (21) auf den Halteelementen (23) freitragend gehalten wird.

**14.** Verfahren gemäß einem der vorstehenden Ansprüche, **gekennzeichnet durch** zumindest eines der Merkmale:

- das Glasband wird mit einer Zugkraft von größer 100 N pro 1000 mm Glasbandbreite vom Ziehtank (7) abgezogen,
- der Druckabfall der Glasschmelze (5) im Ziehtank (7) wird so eingestellt, dass eine Benetzung von an die Düsenöffnung (9) angrenzenden Bereichen der Unterseite des Ziehtanks (7) vermieden wird.

**15.** Verfahren gemäß einem der vorstehenden Ansprüche, **dadurch gekennzeichnet, dass** über die Halterungen des Leitkörpers (11) Strom zugeführt wird und der Leitkörper (11) direkt konduktiv beheizt wird.

**16.** Verfahren gemäß einem der vorstehenden Ansprüche, **dadurch gekennzeichnet, dass** der Ziehtank (7) einen Schacht (75) umfasst, in welchem der Leitkörper (11) angeordnet ist und der an seinem unteren Ende die Düsenöffnung (9) aufweist, wobei die Temperatur der Glasschmelze (5) im Ziehtank (7) so eingestellt wird, dass mit deren temperaturabhängiger Viskosität $\eta$ folgende Beziehung erfüllt ist:

$$48 \frac{\dot{v}}{B} \int_{H_L} \frac{\eta}{(D_S - D_L)^3} dz + 12 \frac{\dot{v}}{B} \int_{H_S} \frac{\eta}{D_S^3} dz > \rho \cdot g \cdot h - p_u$$

wobei v den Volumenstrom der Glasschmelze, B die Breite des Ziehtanks (7) in Richtung entlang der Düsenöffnung (9), Ds die lokale Weite des Schachts 75, $D_L$ die lokale Dicke des Leitkörpers (11), $\rho$ die Dichte der Glasschmelze, *g* die Erdbeschleunigung, *h* die Höhe des Schachts (75) und $p_u$ einen Druck von 2000 Pa bezeichnen.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

**Europäisches Patentamt**
**European Patent Office**
**Office européen des brevets**

# EUROPÄISCHER RECHERCHENBERICHT

Nummer der Anmeldung

EP 20 18 6538

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | WO 2020/104497 A1 (SCHOTT AG [DE]) 28. Mai 2020 (2020-05-28) * Seite 5, Zeilen 14-19; Abbildung 1 * ----- | 1,10 | INV. C03B17/00 C03B17/06 |
| X | DE 15 96 484 B1 (JENAER GLASWERK SCHOTT & GEN [DE]) 28. Oktober 1971 (1971-10-28) | 1,3, 10-12, 14,16 | |
| Y | * Spalte 2, Zeilen 23-59; Abbildungen 4-6 * ----- | 2,4-9, 13,15 | |
| Y | WO 2005/035453 A1 (SCHOTT AG [DE]; LANGE ULRICH [DE] ET AL.) 21. April 2005 (2005-04-21) * Seite 21, Zeile 16 - Seite 22, Zeile 32; Anspruch 22; Abbildungen 2, 3a, 3b, 4a, 4b * ----- | 2,4-9, 13,15 | |
| X | DE 506 472 C (EDWARD DANNER) 4. September 1930 (1930-09-04) * Seite 2, Zeilen 9-13, 25-31, 54-59; Anspruch 1; Abbildung 1 * ----- | 1,10 | |

**RECHERCHIERTE SACHGEBIETE (IPC)**

C03B

Der vorliegende Recherchenbericht wurde für alle Patentansprüche erstellt

| Recherchenort | Abschlußdatum der Recherche | Prüfer |
|---|---|---|
| Den Haag | 12. November 2020 | Flügel, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 18 6538

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2020

| Im Recherchenbericht angeführtes Patentdokument | Datum der Veröffentlichung | Mitglied(er) der Patentfamilie | Datum der Veröffentlichung |
|---|---|---|---|
| WO 2020104497 A1 | 28-05-2020 | KEINE | |
| DE 1596484 B1 | 28-10-1971 | BE 718111 A<br>DE 1596484 B1 | 16-12-1968<br>28-10-1971 |
| WO 2005035453 A1 | 21-04-2005 | CN 1867520 A<br>DE 10348098 A1<br>JP 4563391 B2<br>JP 2007533579 A<br>US 2007271963 A1<br>WO 2005035453 A1 | 22-11-2006<br>19-05-2005<br>13-10-2010<br>22-11-2007<br>29-11-2007<br>21-04-2005 |
| DE 506472 C | 04-09-1930 | KEINE | |

EPO FORM P0461

Für nähere Einzelheiten zu diesem Anhang : siehe Amtsblatt des Europäischen Patentamts, Nr.12/82